# EUROPEAN PATENT APPLICATION

(11) **EP 4 667 819 A1**
(43) Date of publication of application: **24.12.2025**
(21) Application number: 25183748.0
(22) Date of filing: 18.06.2025
(51) Int. Cl.: F21V 5/04, F21V 9/30, F21V 17/02, F21Y 115/30

(54) **PHOSPHOR WHEEL ADJUSTMENT FLEXURE MECHANISM**

(30) Priority: 19.06.2024 US 202418747527
(71) Applicant: Christie Digital Systems USA, Inc., Cypress, CA 90630 (US)
(72) Inventor: PRIEST, Lee, Waterloo, Ontario, N2V 0B7 (CA)
(74) Representative: Richardt Patentanwälte PartG mbB

(57) **Abstract**

A phosphor illumination system including a housing, a phosphor wheel, a condenser lens mounted to the housing, the condenser lens configured to condense light to an irradiation spot on the phosphor wheel and a flexure plate onto which the phosphor wheel is mounted. The flexure plate includes a fixed fastener for fixedly fastening the flexure plate to a first location of the housing and an adjustable fastener for adjustably fastening the flexure plate to a second location of the housing, the adjustable fastener configured to change at least one of a distance and an angle of the flexure plate with respect to the condenser lens as the adjustable fastener is tightened to or loosened from the housing.

## Description

### FIELD

The specification relates generally to phosphor wheels, and specifically to adjustment mechanisms for phosphor wheels.

### BACKGROUND

In a phosphor illumination system, stack-up of mechanical and optical tolerances can adversely affect the focus quality of a light spot on a phosphor wheel, resulting in a degraded performance of the phosphor illumination system. Improving the focus quality by tightening the mechanical and optical tolerances of the elements of phosphor illumination systems significantly increases their cost of manufacture. Additionally, utilizing sliding lens barrels and cams mechanisms to adjust the position of a lens with respect to a phosphor wheel, while less expensive than reducing the tolerances of the elements, still adds cost and complexity to the systems by, for example, introducing challenges in maintaining adequate lens centration tolerances during lens position adjustment operations and ensuring the lens position adjustment operations can be performed smoothly.

### SUMMARY

An aspect of the specification provides a phosphor illumination system including a housing, a phosphor wheel, a condenser lens mounted to the housing, the condenser lens configured to condense light to an irradiation spot on the phosphor wheel and a flexure plate onto which the phosphor wheel is mounted. The flexure plate includes a fixed fastener for fixedly fastening the flexure plate to a first location of the housing and an adjustable fastener for adjustably fastening the flexure plate to a second location of the housing, the adjustable fastener configured to change at least one of a distance and an angle of the flexure plate with respect to the condenser lens as the adjustable fastener is tightened to or loosened from the housing.

### BRIEF DESCRIPTIONS OF THE DRAWINGS

Embodiments are described with reference to the following figures.
FIG. 1 is a top, rear, and left perspective view of an example phosphor illumination system assembly.
FIG. 2 is a bottom, rear, and right perspective view of the example phosphor illumination system assembly of FIG. 1.
FIG. 3 is a rear plan view of the example phosphor illumination system assembly of FIG. 1.
FIG. 4 is a left plan view of some elements of the example phosphor illumination system assembly of FIG. 1.

### DETAILED DESCRIPTION

As discussed above, stack-up of mechanical and optical tolerances can adversely affect the focus quality of phosphor illumination systems. Mitigating tolerance stack-up by means of reducing mechanical and optical tolerances of the different elements of the phosphor illumination systems significantly increases their cost of manufacture. Providing mechanical adjustment mechanisms to adjust the position of a lens by means of lens barrel-and-cam mechanisms introduces complexity to the systems and still results in a significant added cost to the systems. Therefore, a simple and cost-effective design of a novel adjustment mechanism for a phosphor illumination system to account for misalignments resulting from tolerance stack-up without compromising lens centration or ease of adjustment, is highly desirable.

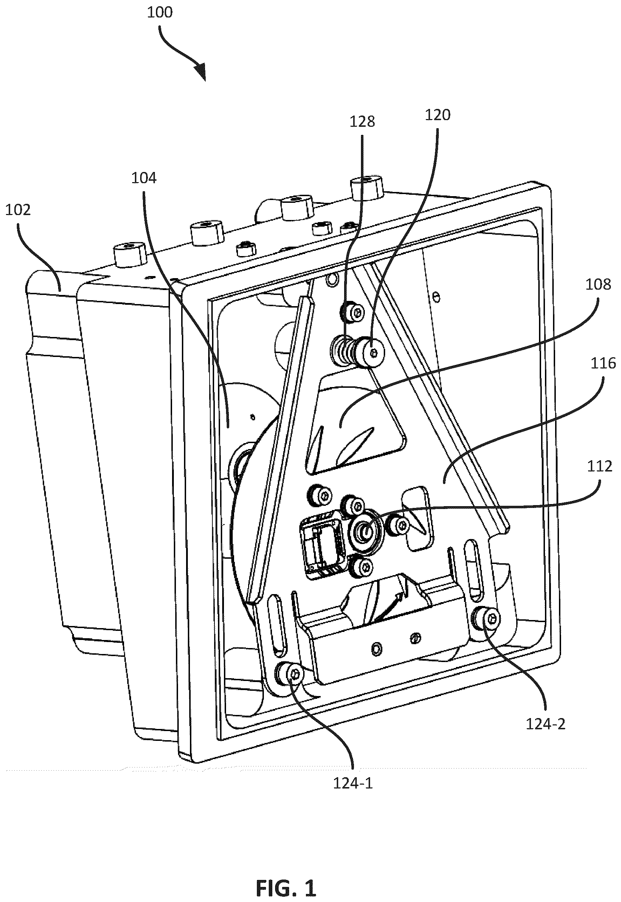

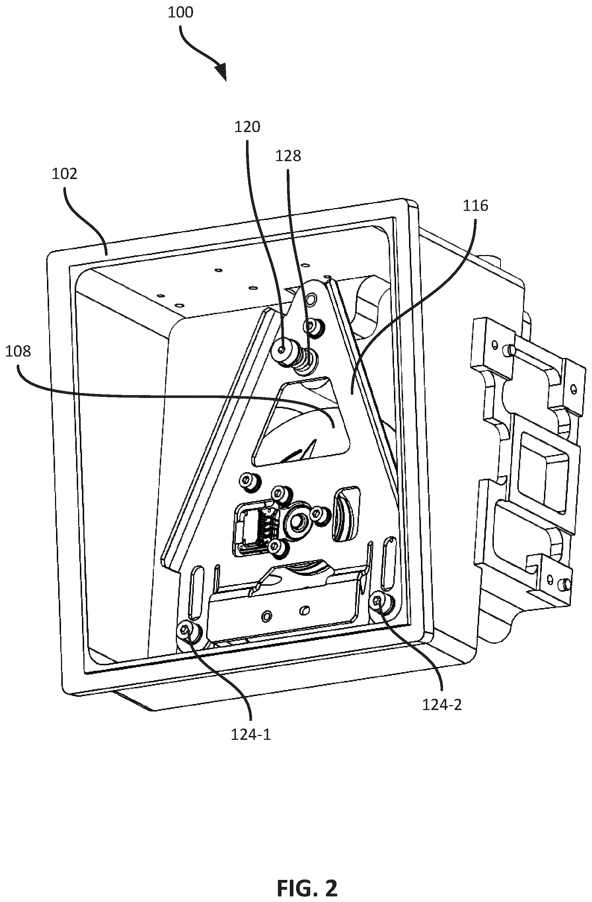

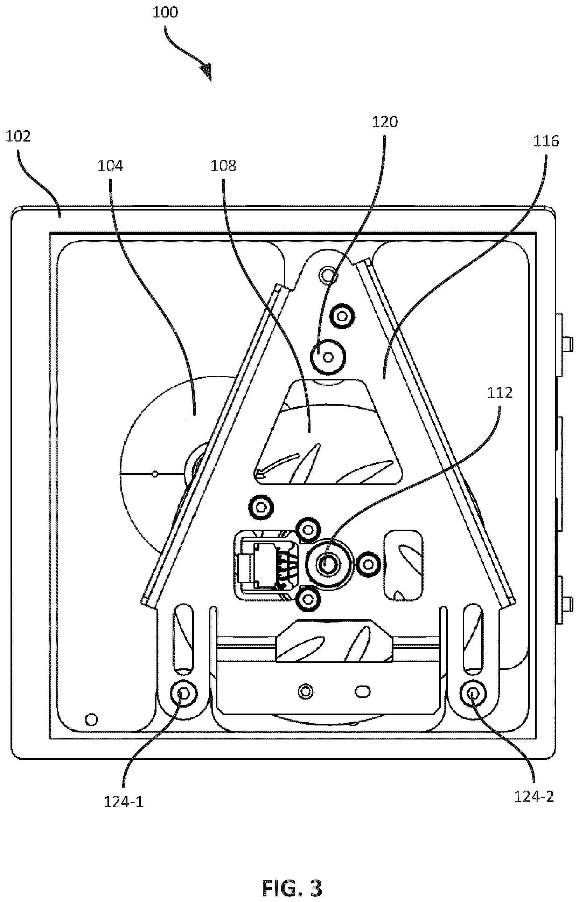

FIGS. 1 to 3 depict an example phosphor illumination system assembly 100 with a flexure adjustment mechanism. The assembly 100 includes a housing 102 onto which an optic system such as a lens 104 may be mounted. The lens 104 may be, for example, a condenser lens, particularly an aspheric condenser lens, that condenses light emitted from a light emitter, such as for example, a laser diode or a laser diode array, to form a thin light beam having a narrow beam width. The lens 104 may be mounted to the assembly 100 by any known means, for example, by a set of mechanical fasteners such as screws, bolts, pins, etc.

The assembly 100 further includes a phosphor wheel 108 onto which the condensed light may be directed so that an irradiation spot is formed on a surface of the phosphor wheel 108 when the condensed light strikes the surface. The phosphor wheel 108 may be coated with a phosphorescent material, also referred to as a phosphor, such as, for example, a yellow, green, red, blue phosphor, etc., so that the material fluoresces when the condensed light strikes the material, thereby changing the color of the light. The phosphor wheel 108 is configured to rotate at a constant speed by a rotary driving device 112, for example, an electrical motor such as a brushless DC motor. The phosphor wheel 108 is rotatably mounted to the driving device 112, for example, by being directly mounted to a drive shaft of the driving device 112, and the driving device 112 is mounted to a flexure plate 116 by any known means, for example, by a set of mechanical fasteners such as screws, bolts, pins, etc. The phosphor wheel 108 is mounted to the flexure plate 116 via the driving device 112 such that a position of a plane surface of the phosphor wheel 108 is fixed relative to a position of a plane surface of the flexure plate 116, wherein both plane surfaces face the lens 108.

The flexure plate 116 may be formed of any suitable flexible material, such as, for example, a polymer such as Polyethylene (PE), Polypropylene (PP), Polyvinyl Chloride (PVC), Polyurethane (PU), etc., a metal such as aluminum, copper, etc., a composite material such as fiberglass, carbon fiber, etc. The flexure plate 116 is mounted to the housing 102 by a set of fasteners including at least one adjustable fastener 120. The flexure plate 116 may further be mounted to the housing 102 by at least one fixed fastener 124. The example assembly 100 shown in FIGS. 1 to 3 depicts a flexure plate 116 mounted to the housing 102 by a single adjustable fastener 120 and by two additional fixed fasteners 124-1 and 124-2 (referred to individually as a fixed fastener 124 and collectively as the fixed fasteners 124).

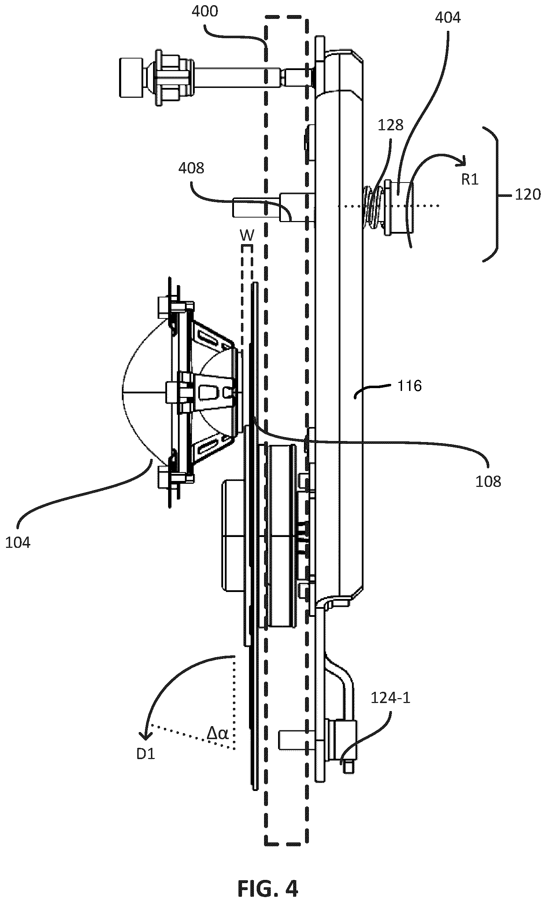

The adjustable fastener 120 is arranged for adjustably fastening the flexure plate 116 to a location of the housing 102. The adjustable fastener 120 is configured to change at least one of a distance and an angle of the flexure plate 116 with respect to the lens 104 as the adjustable fastener 120 is tightened to or loosened from the housing. The distance between the flexure plate 116 and the lens 104 may be determined along a line constituting the optical axis of the lens 104. The angle between the flexure plate 116 and the lens 104 may be determined as an angle between planes, wherein the optical axis of the lens 104 is perpendicular to one of them and another one is parallel to the flat plane of the flexure plate 116 facing the lens 104. The adjustable fastener 120 may include an adjustment screw and a resilient member 128 such as a spring, for example, a coil spring. The housing 102 includes a threaded channel configured to receive the adjustment screw. The resilient member 128 is mounted surrounding the adjustment screw between a head of the adjustment screw and the flexure plate 116. Alternatively, the resilient member 128 may, for example, be mounted between the flexure plate 116 and a surface of the housing 102 on which the threaded channel is provided. Tightening or loosening the adjustment screw induces an angular deflection of the flexure plate 116 that results in an adjustment of the position of the flexure plate 116 and of the phosphor wheel 108 with respect to the lens 104 as further discussed below with reference to FIG. 4. The adjustment includes the change of the distance and/or the angle of phosphor wheel 108 with respect to the condenser lens 104. The distance between the phosphor wheel 108 and the lens 104 may be determined along the line constituting the optical axis of the lens 104. The angle between the phosphor wheel 108 and the lens 104 may be determined as an angle between planes, wherein the optical axis of the lens 104 is perpendicular to one of them and another one is parallel to the flat plane of the phosphor wheel 108 facing the lens 104.

The fixed fasteners 124 are, for example, fixing screws. The housing 102 further includes additional threaded channels configured to receive the fixing screws. Alternatively, the fixed fasteners 124 may be any other suitable type of fasteners to attach the flexure plate 116 to the housing 102, for example, bolts, pins, etc.

FIG. 4 depicts a left plan view of some elements of the example phosphor illumination system assembly 100. A portion 400 of the housing 102, to which the flexure plate 116 is attached, is schematically depicted with broken lines for reference. The adjustable fastener 120 is shown including the resilient member 128, and an adjustment screw including a screw head 404 and a screw body 408. When the adjustable fastener 120 is tightened, for example, by rotating the screw head 404 in a first radial direction R1, the screw body 408 advances into a channel provided in the portion 400. Since the flexure plate is further fixed to the portion 400 by means of fixed fasteners 124, the tightening of the adjustable fastener 120 further results in the flexure plate 116 being deflected in a first angular direction D1, which in turn results in a decrease of a width W between the lens 104 and the phosphor wheel 108. The width W may be the distance between the lens 104 and the phosphor wheel 108 as specified above. As alternative, which is not depicted in Fig. 4, the width W may be the distance between the lens 104 and the flexure plate 116 as specified above. Conversely, if the adjustable fastener 120 is loosened, for example, by rotating the screw head 404 in a second radial direction opposite the first radial direction R1, the screw body 408 retracts from the channel provided in the portion 400, and the flexure plate 116 is deflected in a second angular direction opposite the first angular direction D1, which in turn results in an increase of the width W. By adjusting the width W by means of adjusting the adjustable fastener 120, the position of the phosphor wheel 108 with respect to the lens 104 may be adjusted, to account for tolerance stack-up effects affecting the focus quality of the irradiation spot on the phosphor wheel 108 onto which the condensed light beam from the lens 104 is directed. An adjustment of about 1 mm of the width W may result in a total angular change Δα lower than 1°, for example, of about 0.84°, which in turn results in a negligible angular misalignment of the irradiation spot, due to the Lambertian properties of the irradiation spot on the phosphor wheel 108, while achieving a correction of the width W to set the irradiation spot in a focus of the lens 104, thereby accounting for misalignments between the lens 104 and the phosphor wheel due to tolerance stack-up without the need of additional lens adjusting mechanisms to adjust the position of the lens 104 with respect to the phosphor wheel 108 such as sliding lens barrels and cams which introduce complexity and cost to the system 100. The angular change may be a change of the angle between the lens 104 and the phosphor wheel 108 of the angle between the lens 108 and the flexure plate 116 as specified above.

The present invention has been described by way of examples. Modifications and variations to the above-described examples are possible and may occur to those skilled in the art with the benefit of this disclosure. All such modifications and variations are believed to be within the scope of the present invention, as defined by the claims. For example, while the example flexure plate 116 has been described as configured to be attached to the housing 102 by means of a single adjustable fastener 120 and two fixed fasteners 124-1 and 124-2, an alternative flexure plate can be configured to be attached to an alternative housing by means of more than one adjustable fastener 120, for example, by means of three adjustable fasteners 120, two of the three adjustable fasteners 120 replacing the two fixed fasteners 124-1 and 124-2. In general, a flexure plate may be configured to be attached to a housing by at least one adjustable fastener 120 and by at least one additional fastener that can be an adjustable fastener 120 or a fixed fastener 124. Furthermore, while the adjustable fastener 120 has been described as comprising a resilient member 128 that can be, for example, a coil spring, a different type of spring may be used, for example, a leaf spring, a flat spring, etc. As a further alternative, the resilient member 128 may have a different form factor, such as, for example, a disk or a washer, and be made of a resilient material such as, for example, rubber, polyurethane foam, silicone, etc.

It should be recognized that features and aspects of the various examples provided above can be combined into further examples that also fall within the scope of the present disclosure. In addition, the figures are not to scale and may have size and shape exaggerated for illustrative purposes.

The scope of the claims should not be limited by the embodiments set forth in the above examples but should be given the broadest interpretation consistent with the description as a whole.

## Claims

1. A phosphor illumination system comprising:
a housing (102);
a phosphor wheel (108);
a condenser lens (104) mounted to the housing, the condenser lens configured to condense light to an irradiation spot on the phosphor wheel; and
a flexure plate (116) onto which the phosphor wheel is mounted, the flexure plate including:
a fixed fastener (124) for fixedly fastening the flexure plate to a first location of the housing; and
an adjustable fastener (120) for adjustably fastening the flexure plate to a second location of the housing, the adjustable fastener configured to change at least one of a distance and an angle of the flexure plate with respect to the condenser lens as the adjustable fastener is tightened to or loosened from the housing.

2. The phosphor illumination system of claim 1, wherein the flexure plate further includes:
a second fixed fastener for fixedly fastening the flexure plate to a third location of the housing.

3. The phosphor illumination system of claim 1 or 2, wherein the adjustable fastener includes an adjustment screw, and wherein the second location of the housing includes a threaded channel configured to support the adjustment screw.

4. The phosphor illumination system of claim 3, wherein the adjustable fastener further includes a resilient member (128).

5. The phosphor illumination system of claim 4, wherein the resilient member is mounted surrounding the adjustment screw between a head (404) of the adjustment screw and the flexure plate.

6. The phosphor illumination system of claim 4, wherein the resilient member is mounted between the flexure plate and a surface of the housing on which the threaded channel is provided.

7. The phosphor illumination system of claim 4, wherein the resilient member is a coil spring.

8. The phosphor illumination system of any one of the preceding claims 1, wherein an adjustment of a distance between the condenser lens and the flexure plate of 1 mm by tightening or loosening the adjustable fastener results in an angular adjustment of the flexure plate of less than 1°.
